# EUROPÄISCHE PATENTSCHRIFT

(11) **EP 2 376 791 B1**
(45) Veröffentlichungstag und Bekanntmachung des Hinweises auf die Patenterteilung: **21.11.2012**
(21) Anmeldenummer: 09767959.1
(22) Anmeldetag: 01.12.2009
(51) Int. Cl.: F16B 5/02

(54) **DISTANZVORRICHTUNG UND BEFESTIGUNGSANORDNUNG MIT DISTANZVORRICHTUNG**
DISTANCE DEVICE AND FASTENING SYSTEM HAVING DISTANCE DEVICE
DISPOSITIF D'ÉCARTEMENT ET SYSTÈME DE FIXATION AVEC DISPOSITIF D'ÉCARTEMENT

(30) Priorität: 12.12.2008 DE 102008062894
(43) Veröffentlichungstag der Anmeldung: 19.10.2011
(73) Patentinhaber: Hans Und Ottmar Binder GbR, 89558 Böhmenkirch (DE)
(72) Erfinder: BINDER, Hans, 89558 Böhmenkirch (DE); BINDER, Ottmar, 89558 Böhmenkirch (DE)
(74) Vertreter: Grosse, Rainer
(86) Internationale Anmeldenummer: PCT/EP2009/008539
(87) Internationale Veröffentlichungsnummer: WO 2010/066363

(56) Entgegenhaltungen:
- EP-A1- 1 705 066
- EP-A2- 1 215 401
- US-A- 5 288 191

## Beschreibung

Die Erfindung betrifft eine Distanzvorrichtung zur Überbrückung eines Freiraums zwischen einem Tragteil und einer Dachkarosserie für die Befestigung eines Dachgepäckträgers, wie eine Dachreling, eine Dachleiste oder dergleichen, auf einem Fahrzeugdach mittels einer Gewindeschraube, mit einem Stützteil und einem Gegenstützteil, wobei Stützteil und Gegenstützteil über eine Gewindeverbindung aneinander gehalten und relativ zueinander zur Einstellung der Überbrückungslänge dadurch verstellbar sind, dass das Stützteil oder Gegenstützteil durch eine Drehmitnahmeverbindung zur Gewindeschraube bei deren Einschrauben in ein Gegengewinde des Dachgepäckträgers oder Tragteils bis in eine Anlagestellung an das Tragteil oder an die Dachkarosserie mitgeschleppt wird.

Dachgepäckträger, wie Dachrelings, Dachleisten und dergleichen werden auf dem Fahrzeugdach eines Fahrzeugs montiert, wobei sie sich nicht an der aus dünnem Blech bestehenden Dachkarosserie abstützen, sondern über eine Distanzvorrichtung mit einem Tragteil des Daches des Fahrzeugs verbunden sind. Das Tragteil kann auftretende Kräfte aufnehmen, die bei schweren Dachlasten vorliegt. Das Tragteil ist von außen nicht sichtbar, da es unterhalb des Blechs der Dachkarosserie liegt. Auch vom Innenraum des Fahrzeugs ist das Tragteil nicht sichtbar, da es von der Innenverkleidung (Dachverkleidung) abgedeckt wird. Zwischen der Unterseite der Dachkarosserie und der Oberseite des Tragteils ist ein Freiraum ausgebildet, der aufgrund von Fertigungstoleranzen mehr oder weniger groß ist. Bei der Montage des Dachgepäckträgers muss gewährleistet werden, dass eine feste Verbindung zum Tragteil besteht, jedoch gleichzeitig kein Druck auf die Dachkarosserie ausgeübt wird, der zu Blechverformungen führen und als störende Verwerfung erkannt werden würde.

Es sind Distanzvorrichtungen bekannt, die eine aufwendige Montage erfordern. So ist es beispielsweise möglich, Distanzstücke in unterschiedlichen Längen zu verwenden, wobei der Monteur jeweils das für die Größe des vorliegenden Freiraums passende Distanzstück auswählt. Ferner ist es bekannt, dass das Distanzstück zwei über eine Gewindeverbindung aneinander gehaltene Teile aufweist, die zur Überbrückung des Freiraums dadurch verstellt werden, dass eine Drehmitnahme zu einer für die Befestigung des Dachgepäckträgers vorgesehenen Gewindeschraube besteht, sodass diese beim Einschrauben die beiden Teile mittels der Gewindeverbindung derart weit durch Mitschleppen verlagert, dass der Freiraum überbrückt wird. Für das Mitschleppen durch die Gewindeschraube ist ein mit Blattfederabschnitten versehenes Federelement vorgesehen, das sowohl ein Eindrücken der Gewindeschraube, also ein axiales Verschieben von dieser, ermöglicht, als auch einen Klemmdruck auf die Schraube derart gewährleistet, dass die erwähnte Drehmitnahme zur Gewindeschraube für das Einstellen der Überbrückungslänge des Freiraumes ermöglicht ist. Das mit Blattfederabschnitten versehene Federelement führt zu einer aufwendigen Konstruktion.

Der Erfindung liegt die Aufgabe zugrunde, eine einfache Distanzvorrichtung anzugeben, die leicht zu montieren ist. Eine solche Distanzvorrichtung ist aus der US 5288191 A bekannt.

Diese Aufgabe wird unter Berücksichtigung der eingangs genannten Merkmale dadurch gelöst, dass die Drehmitnahmeverbindung einen Kunststoffmitnehmer aufweist, in den das Gewinde der Gewindeschraube für das Mitschleppen mit Reibwiderstand eingebracht/eingeschraubt wird/ist. Durch die Ausgestaltung als Kunststoffmitnehmer ist aufgrund des gegenüber dem Metall der Gewindeschraube relativ weichen Kunststoffmaterials eine einfache Reibschlussmitnahme gewährleistet, die nach Beendigung des Mitschleppvorgangs problemlos ein Weiterdrehen der Gewindeschraube zur Befestigung des Dachgepäckträgers erlaubt. Durch die erfindungsgemäße Verwendung eines einfachen Kunststoffmitnehmers lassen sich bekannte Distanzvorrichtungen, die nach einem von der Erfindung abweichenden Prinzip arbeiten, ebenfalls erfindungsgemäß einsetzen, indem sie in einfacher Weise mit dem Kunststoffmitnehmer ausgerüstet werden. Dieser lässt sich problemlos in die Aufnahme für die Gewindeschraube einstecken.

Nach einer Weiterbildung der Erfindung ist vorgesehen, dass der Kunststoffmitnehmer ein Untermaß-Innengewinde für die Gewindeschraube, einen Untermaß-Schraubenkanal und/oder einen Aufnahmekanal zum selbstschneidenden Einschrauben des Gewindes der Gewindeschraube aufweist. Liegt das Untermaß-Innengewinde vor, so lässt sich die Gewindeschraube nur mit entsprechendem Reibwiderstand in das Untermaß-Innengewinde einschrauben, wodurch die Drehmitnahmeverbindung realisiert ist. Liegt ein Untermaß-Schraubenkanal vor, so erfolgt ein Klemmen des Untermaß-Schraubenkanals auf dem gewendelten Gewindedach des Gewindes der Gewindeschraube, wodurch ebenfalls die Drehmitnahme gesichert ist. Gleichzeitig lässt sich bei dieser Ausgestaltung die Gewindeschraube auch mit entsprechendem axialen Druck axial in dem Untermaß-Schraubenkanal verschieben. Es ist ferner möglich, einen Aufnahmekanal zum selbstschneidenden Einschrauben des Gewindes der Gewindeschraube zu verwenden. Durch das Einschneiden des Gewindes der Gewindeschraube ist ein Reibschluss gewährleistet, der eine Drehmitnahme garantiert. Beim Untermaß-Innengewinde und beim Aufnahmekanal kann eine Gewindezerstörung durch eine Fräswirkung des Schraubengewindes erfolgen, wenn nach dem Einstellen des Überbrückungsmaßes der Distanzvorrichtung ein Weiterdrehen der Gewindeschraube durchgeführt wird. Selbstverständlich sind auch Kombinationen beliebiger Art der vorstehend genannten Lösungen möglich.

Nach einer Weiterbildung der Erfindung ist vorgesehen, dass der Kunststoffmitnehmer als Mitnehmerhülse ausgebildet ist, die einen Innen kanal für die Gewindeschraube aufweist. Bei dem Innenkanal kann es sich insbesondere um das Untermaß-Innengewinde, den Untermaß-Schraubenkanal oder den Aufnahmekanal zum Selbsteinschneiden handeln.

Es ist vorteilhaft, wenn die Mitnehmerhülse im Stützteil oder Gegenstützteil befestigt ist oder das Stützteil oder Gegenstützteil bildet. Im ersten Fall bildet die Mitnehmerhülse ein Einsetzteil. Im zweiten Fall ist das gesamte Stützteil oder Gegenstützteil einstückig ausgebildet und realisiert dabei gleichzeitig die Mitnehmerhülse.

Eine Weiterbildung der Erfindung sieht vor, eine Verdrehsicherung zwischen Mitnehmerhülse und Stützteil oder Gegenstützteil zu schaffen, wobei die Verdrehsicherung als unrunder Außenquerschnitt der Mitnehmerhülse und entsprechend formangepasster Innenquerschnitt eines Durchbruchs des Stützteils oder Gegenstützteils ausgebildet ist. Hierdurch ist gewährleistet, dass die aufgrund der Mitnahmeverbindung in Drehung versetzte Mitnehmerhülse das Stützteil oder Gegenstützteil mitdreht, um die Länge der Distanzvorrichtung einzustellen.

Es ist vorteilhaft, einen an dem Stützteil oder Gegenstützteil befestigbaren/befestigten Halter zur Festlegung des Stützteils oder Gegenstützteils am Tragteil oder an der Dachkonstruktion vorzusehen. Aufgrund dieser Maßnahme wird ein Teil der über die Gewindeverbindung aneinander gehaltenen Teile ortsfest festgelegt und kann sich demzufolge beim Drehen des anderen Teiles nicht mitdrehen. Auch erleichtert der Halter die Montage, da die Distanzvorrichtung nicht ungewollt ihre Montageposition verlässt. Dies gilt auch bei der Vormontage, wenn die Überbrückungslänge noch nicht eingestellt ist.

Bevorzugt lässt sich der Halter an dem Stützteil oder Gegenstützteil mit einer Klipsbefestigung befestigen. Die Klipsbefestigung hält den Halter verdrehsicher an dem Stützteil oder dem Gegenstützteil. Alternativ ist es auch möglich, dass der Halter einstückig mit dem Stützteil oder Gegenstützteil ausgebildet ist.

Nach einer Weiterbildung der Erfindung ist vorgesehen, dass der Halter Stütz- und Hintergriffselemente zur Befestigung am Tragteil oder an der Dachkarosserie aufweist. Vorzugweise erfolgt die Befestigung des Halters an einem Randbereich einer Durchgangsöffnung des Tragteils oder der Dachkarosserie. Die Stützelemente stützen sich an dem Randbereich der Durchgangsöffnung zum Beispiel auf der Unterseite der Dachkarosserie ab und die Hintergriffselemente liegen an dem Randbereich der Durchgangsöffnung auf der Oberseite der Dachkarosserie an, sodass durch die Abstützung und den Hintergriff ein sicheres Festlegen am Tragteil oder an der Dachkarosserie gewährleistet ist. Die Stütz- und/oder Hintergriffselemente können aus elastischem Material gefertigt sein, sodass für die Befestigung deren Verlagern mit anschließendem Rückverlagern möglich ist, wodurch die Abstützung und/oder der Hintergriff realisiert werden kann/können.

Der Halter ist bevorzugt als Ringhalter ausgebildet, der das Stützteil oder Gegenstützteil umgreift. Er wird demzufolge ringartig über das Stützteil oder Gegenstützteil gestülpt und dann bevorzugt mittels der Klipsbefestigung befestigt.

Eine Weiterbildung der Erfindung sieht vor, dass das Stützteil als mit Innengewinde versehene Außenhülse ausgebildet ist. Vorzugsweise ist vorgesehen, dass das Gegenstützteil als mit Außengewinde versehene Innenhülse ausgebildet ist. Das Außengewinde der Innenhülse wird in das Innengewinde der Außenhülse eingeschraubt, wodurch die erwähnte Gewindeverbindung zwischen Stützteil und Gegenstützteil zur Einstellung der Überbrückungslänge realisiert ist.

Ferner ist es vorteilhaft, wenn die Stütz- und Hintergriffselemente des Halters zum Festlegen an dem Randbereich einer Durchgangsöffnung der Dachkarosserie ausgebildet sind. Hierauf wurde vorstehend schon näher eingegangen. Ferner wurde erwähnt, dass die Stütz- und/oder Hintergriffselemente aus elastischem Material bestehen können, bevorzugt ist vorgesehen, dass sie von elastischen Haltearmen gebildet sind oder diese aufweisen.

Die Erfindung betrifft ferner eine Befestigungsanordnung mit einem mindestens ein Tragteil und eine Dachkarosserie aufweisenden Fahrzeugdach, einem Dachgepäckträger und einer Distanzvorrichtung, insbesondere gemäß einer oder mehreren der vorstehend erwähnten Ausführungen, zur Befestigung des Dachgepäckträgers, wie eine Dachreling, eine Dachleiste oder dergleichen, auf dem Fahrzeugdach, wobei die Dachkarosserie eine Durchgangsöffnung aufweist, an deren Randbereich die Distanzvorrichtung festlegbar ist und wobei die Distanzvorrichtung die Durchgangsöffnung in Richtung auf den Dachgepäckträger zur Anlage an diesem durchgreift. Dieses Durchgreifen erfolgt mittels eines Stützteils oder Gegenstützteils der Distanzvorrichtung berührungsfrei zur Durchgangsöffnung, sodass auf die Dachkarosserie keine Verformungskräfte wirken.

Die Zeichnungen veranschaulichen die Erfindung anhand eines Ausführungsbeispiels, und zwar zeigt:
- Figur 1: eine schematische Schnittansicht durch eine Befestigungsanordnung mit einer Distanzvorrichtung,
- Figur 2: die Distanzvorrichtung in perspektivischer Ansicht schräg von unten,
- Figur 3: eine Explosionsdarstellung der Distanzvorrichtung,
- Figur 4: eine perspektivische Ansicht der Distanzvorrichtung schräg von oben mit Gewindeschraube,
- Figur 5: eine Ansicht auf die Distanzvorrichtung und eine Dachkarosserie eines Fahrzeugs von oben und
- Figur 6: eine Ansicht auf die Anordnung der Figur 5 von unten.

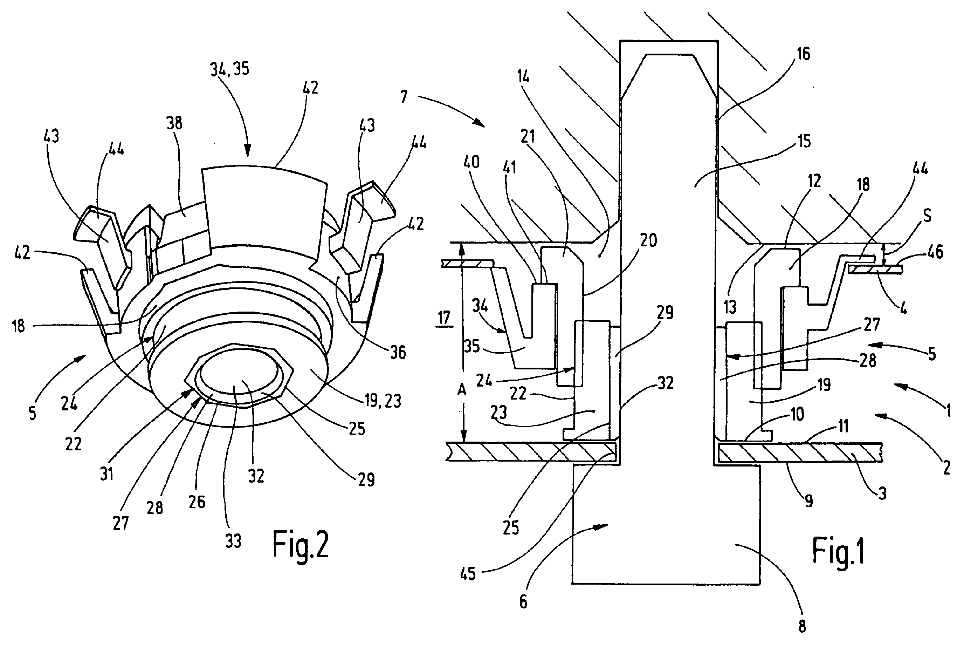

Die Figur 1 zeigt einen Ausschnitt einer Befestigungsanordnung 1, mit einem Fahrzeugdach 2, von dem ein Bereich eines Tragteils 3 und ein Bereich einer Dachkarosserie 4 dargestellt ist. Bei der Dachkarosserie handelt es sich um ein von außen sichtbare Dachblech des Fahrzeugs, insbesondere Kraftfahrzeugs; das Tragteil 3 ist ein stabiles Bauteil des Fahrzeugdachs 2, das weder von außen noch vom Innenraum des Fahrzeugs sichtbar ist und hohe Kräfte aufnehmen kann. Zwischen Tragteil 3 und Dachkarosserie 4 befindet sich eine Distanzvorrichtung 5, der eine Gewindeschraube 6 zugeordnet ist, mittels der außen auf dem Dach des Fahrzeugs ein Dachgepäckträger 7 gehalten wird, wobei von dem Dachgepäckträger 7 lediglich ein kleiner Ausschnitt gezeigt ist.

Aus der Figur 1 wird deutlich, dass ein Kopf 8 der Gewindeschraube gegen die Unterseite 9 des Tragteils 3 gespannt ist, dass sich aufgrund der durch die Gewindeschraube 6 auf den Dachgepäckträger 7 aufgebrachten Spannkraft die Unterseite 10 der Distanzvorrichtung 5 auf der Oberseite 11 des Tragteils 3 abstützt und dass sich die Oberseite 12 der Distanzvorrichtung 5 an der Unterseite 13 des Dachgepäckträgers 7 abstützt, sodass der Dachgepäckträger 7 fest mit dem Tragteil 3 verspannt ist, ohne dass Kräfte auf die Dachkarosserie 4 wirken, die zu einer Verformung der Dachkarosserie 4 führen könnten. Zum Durchgreifen der Gewindeschraube 6 und der Distanzvorrichtung 5 weist die Dachkarosserie 4 eine Durchgangsöffnung 14 auf. Für das erwähnte Verspannen ist ein Gewindeschaft 15 der Gewindeschraube 6 in eine Gewindebohrung 16 (Gegengewinde) an der Unterseite 13 des Dachgepäckträgers 7 eingeschraubt. Der Dachgepäckträger 7 kann beispielsweise als Dachleiste ausgebildet sein. Aus alledem wird deutlich, dass die Distanzvorrichtung 5 einen Freiraum 17 mit einer Überbrückungslänge A überspannt, wobei - in Abhängigkeit von Fertigungstoleranzen - die Überbrückungslänge A bei einzelnen Fahrzeugen schwanken kann und/oder bei unterschiedlichen Fahrzeugtypen unterschiedlich groß ist, sodass die Distanzvorrichtung 5 in der Lage sein muss, bei der Montage diese Unterschiede auszugleichen. Im Nachstehenden wird daher näher auf die Konstruktion der Distanzvorrichtung 5 eingegangen.

Die Distanzvorrichtung 5 weist - gemäß der Figuren 1 bis 4 - ein Stützteil 18 und ein Gegenstützteil 19 auf. Das Stützteil 18 ist als mit Innengewinde 20 versehene Außenhülse 21 und das Gegenstützteil 19 als mit Außengewinde 22 versehene Innenhülse 23 ausgebildet. Stützteil 18 und Gegenstützteil 19 stehen über das Innengewinde 20 und das Außengewinde 22 miteinander in Verbindung, das heißt, diese beiden Teile sind miteinander verschraubt. Je weiter die Innenhülse 23 aus der Außenhülse 21 herausgeschraubt wird, umso länger wird die Distanzvorrichtung 5 und damit die Überbrückungslänge A. Im noch nicht montierten Zustand ist die Innenhülse 23 derart weit in die Außenhülse 21 eingeschraubt, dass eine Gesamtlänge der Distanzvorrichtung 5 vorliegt, die kleiner ist als die Überbrückungslänge A. Innengewinde 20 und Außengewinde 22 bilden eine Gewindeverbindung 24 zwischen Stützteil 18 und Gegenstützteil 19.

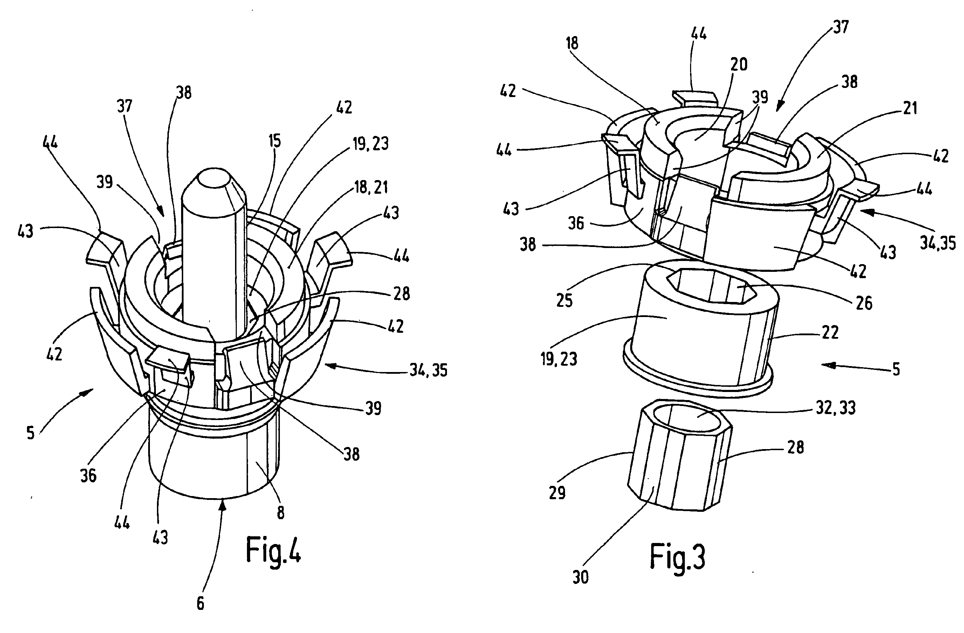

Das Gegenstützteil 19 weist einen Durchbruch 25 auf, der - insbesondere gemäß der Figur 2 und 3 - einen achteckigen Innenquerschnitt 26 besitzen kann. Im Durchbruch 25 ist eine Drehmitnahmeverbindung 27 in Form eines Kunststoffmitnehmers 28 angeordnet, insbesondere axial eingesteckt, wobei der Kunststoffmitnehmer 28 bevorzugt als Mitnehmerhülse 29 ausgebildet ist. Die Mitnehmerhülse 29 weist einen zum Innenquerschnitt 26 formangepassten Außenquerschnitt 30 auf, der demzufolge ebenfalls achteckig gestaltet sein kann. Anstelle der Achteckigkeit können auch andere unrunde, also nicht kreisförmige Querschnitte zum Einsatz gelangen, die dazu führen, dass eine Verdrehsicherung 31 zwischen Gegenstützteil 19 und Kunststoffmitnehmer 28 ausgebildet wird.

Der Kunststoffmitnehmer 28 besitzt einen Innenkanal 32 zur Aufnahme des Gewindeschafts 15 der Gewindeschraube 6, wobei der Innenkanal 32 im vorliegenden Ausführungsbeispiel als Untermaß-Schraubenkanal 33 ausgebildet ist, das heißt, der Gewindeschaft 15 hat kein Spiel im Untermaß-Schraubenkanal 33, sondern die glatten Kanalwandungen des Untermaß-Schraubenkanals 33 üben eine Radialkraft auf den Gewindeschaft 15 aus, die jedoch nicht so groß ist, dass sich die Gewindeschraube 6 nicht mehr relativ zum Kunststoffmitnehmer 28 drehen lässt, sondern ab einem gewissen, vorgebbaren Drehmoment sich die Teile relativ zueinander verdrehen können. Ferner ist es möglich, den Gewindeschaft 15 innerhalb des Untermaß-Schraubenkanals 33 axial zu verschieben, was jedoch ebenfalls eine entsprechende Verschiebekraft aufgrund der Klemmwirkung des Kunststoffmitnehmers 28 auf dem Gewindeschaft erfordert.

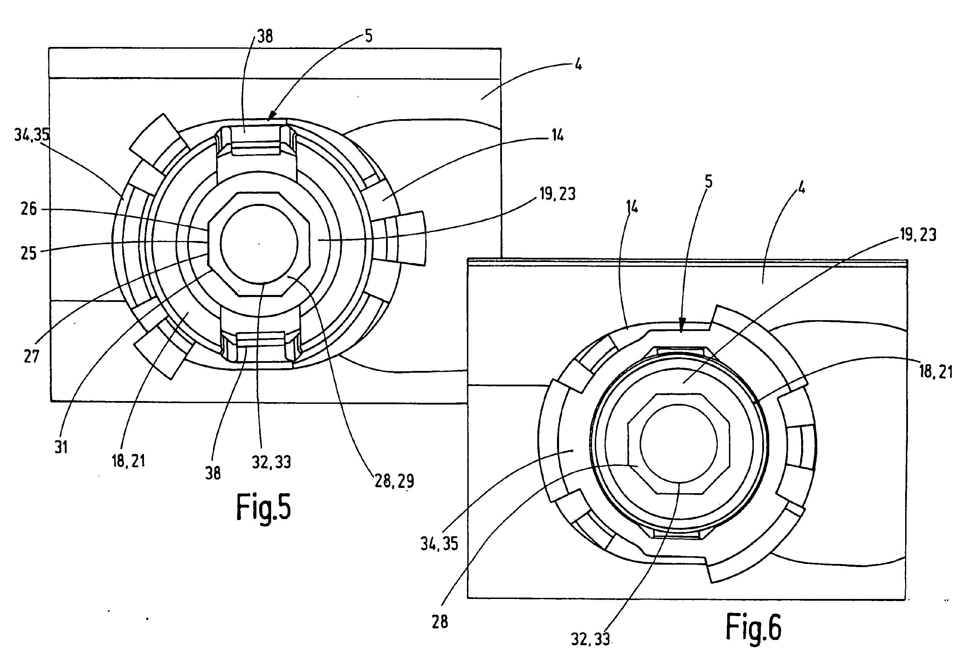

Um die Distanzvorrichtung 5 bei der Montage an der Dachkarosserie 4 ortsfest und insbesondere unverdrehbar festlegen zu können, ist ein Halter 34 vorgesehen, der am Stützteil 18 lösbar befestigt ist. Der Halter 34 ist als Ringhalter 35 ausgebildet. Er weist einen Ring 36 auf, der axial auf das Stützteil 18 aufgeschoben ist, derart weit, dass eine Klipsbefestigung 37 mit dem Stützteil 18 verrastet. Die Klipsbefestigung 37 weist zwei, einander diametral gegenüberliegende Rasthaken 38 auf, die in randoffene, axiale Ausnehmungen 39 des Stützteils 18 radial einrasten. Gleichzeitig stößt in dieser Position eine Ringstirnfläche 40 des Rings 36 gegen eine Ringstufe 41 des Stützteils 18, sodass keine axiale Verschiebung des Halters 34 auf dem Stützteil 18 möglich ist. Die in die Ausnehmungen 39 eingreifenden Rasthaken 38 verhindern eine Relativverdrehung von Halter 34 und Stützteil 18. An der Mantelfläche des Rings 36 des Halters 34 sind Stützelemente 42 und Hintergriffselemente 43 vorzugsweise einstückig angeformt, wobei vorzugsweise drei gleichmäßig winkelbeabstandete Stützelemente 42 und drei gleichmäßig winkelbeabstandete Hintergriffselemente 43 vorgesehen sind. Stützelemente 42 und Hintergriffselemente 43 sind armartig gestaltet, das heißt, sie können aufgrund der Flexibilität des Materials, insbesondere Kunststoffmaterials, radial federn. Die Hintergriffselemente 43 weisen radial nach außen weisende Hintergrifflaschen 44 auf. Soll - gemäß der Figuren 5 und 6 - die Distanzvorrichtung 5 in der Durchgangsöffnung 14 der Dachkarosserie 4 festgelegt werden, so wird die Distanzvorrichtung 5 von außen her, also von außerhalb des Fahrzeugs, in die Durchgangsöffnung 14 eingesteckt, derart, dass die im Wesentlichen schräg zur Längserstreckung der Distanzvorrichtung verlaufenden Stützelemente 42 radial nach innen einfedern. Sobald die Hintergrifflaschen 44 auf der Oberseite der Dachkarosserie 4 aufliegen, schnappen die Stützelemente 42 durch Verlassen des Randes der Durchgangsöffnung 14 elastisch radial nach außen und stützen sich auf diese Art und Weise an der Unterseite der Dachkarosserie 4 ab. Dadurch ist die Distanzvorrichtung 5 in der Durchgangsöffnung 14 klipsend festgelegt, wobei - gemäß der Figuren 5 und 6 - aufgrund des unrunden Querschnitts der Durchgangsöffnung 14 und der ebenfalls unrunden Struktur der Distanzvorrichtung 5 auch ein Verdrehschutz gebildet ist. Aus den Figuren 5 und 6 ist ferner erkennbar, dass der Durchmesser des Stützteils 18 kleiner als der kleinste Durchmesser der Durchgangsöffnung 14 ist, sodass - gemäß Figur 1 - keine Berührung zwischen Dachkarosserie 4 und Stützteil 18 vorliegt und überdies das Stützteil 18 derart weit nach außen aus der Durchgangsöffnung 14 herausragt, dass ein dort befestigter Dachgepäckträger 7 sich an dem Stützteil 18 und nicht an der Dachkarosserie 4 abstützt.

Es ergibt sich folgende Funktionsweise: Für die Montage des Dachgepäckträgers 7 auf dem Fahrzeugdach 2 wird zunächst eine Distanzvorrichtung 5, bei der Stützteil 18 und Gegenstützteil 19 auf ein enges Überbrückungsmaß zusammengeschraubt sind, von außen her - wie vorstehend beschrieben - in die Durchgangsöffnung 14 der Dachkarosserie 4 eingeklipst. Anschließend wird vom Innern des Fahrzeugs bei noch nicht eingebauter oder demontierter Dachverkleidung die Gewindeschraube 6 durch ein Durchgangsloch 45 des Tragteils 3 geführt und in den Untermaß-Schraubenkanal 33 eingedrückt. Dies erfordert aufgrund des Untermaßes eine entsprechende Kraft und kann nur so weit in axialer Richtung erfolgen, bis das freie Ende des Gewindeschafts 15 der Gewindeschraube 6 gegen die Gewindebohrung 16 des auf das Fahrzeugdach 2 von außen aufgelegten Dachgepäckträgers 7 tritt. Nunmehr wird mit einem geeigneten Werkzeug die Gewindeschraube 6 in die Gewindebohrung 16 eingedreht. Da die Mitnehmerhülse 29 durch die Drehung der Gewindeschraube 6 aufgrund eines Reibwiderstandes mitgeschleppt wird, wird das Gegenstützteil 19 aus dem Stützteil 18 axial so weit herausgedreht, bis die Unterseite 10 des Gegenstützteils 19 gegen die Oberseite 11 des Tragteils 3 tritt. In dieser Situation ist die Gewindeschraube 6 noch nicht vollständig in die Gewindebohrung 16 eingedreht. Wird nun die Gewindeschraube 16 weiter gedreht, so wird der Reibwiderstand zwischen dem Kunststoffmitnehmer 28 und der Gewindeschraube überwunden. Das Drehen der Schraube 6 erfolgt solange, bis der Dachgepäckträger 7 festgelegt ist. Dabei stützt er sich mit seiner Unterseite 13 an der Oberseite 12 des Stützteils 18 ab, die Unterseite 10 des Gegenstützteils 19 stützt sich an der Oberseite 11 des Tragteils 3 ab und der Kopf 8 der Gewindeschraube 6 liegt an der Unterseite 9 des Tragteils 3 an. Die Oberseite 46 der Dachkarosserie 4 weist zur Unterseite 13 des Dachgepäckträgers 7 einen Abstand S auf, der größer ist als die Dicke der Hintergriffslaschen 44, sodass diese nicht eingequetscht werden. Damit ist der Dachgepäckträger 7, ohne dass unzulässige Kräfte auf die Dachkarosserie 4 ausgeübt werden, fest und sicher mit dem Tragteil 3 des Fahrzeugdachs 2 verbunden.

Selbstverständlich sind vorzugsweise über die Längserstreckung des Dachgepäckträgers 7 mehrere Befestigungsanordnungen 1 vorgesehen.

## Patentansprüche

1. Distanzvorrichtung zur Oberbrückung eines Freiraums zwischen einem Tragteil und einer Dachkarosserie für die Befestigung eines Dachgepäckträgers, wie eine Dachreling, eine Dachleiste oder dergleichen, auf einem Fahrzeugdach mittels einer Gewindeschraube, mit einem Stützteil und einem Gegenstützteil, wobei Stützteil und Gegenstützteil über eine Gewindeverbindung aneinander gehalten und relativ zueinander zur Einstellung der Überbrückungslänge dadurch verstellbar sind, dass das Stützteil oder Gegenstützteil durch eine Drehmitnahmeverbindung zur Gewindeschraube bei deren Einschrauben in ein Gegengewinde des Dachgepäckträgers oder Tragteils bis in eine Anlagestellung an das Tragteil oder an die Dachkarosserie mitgeschleppt wird, **dadurch gekennzeichnet, dass** die Drehmitnahmeverbindung (27) einen Kunststoffmitnehmer (28) aufweist, in den das Gewinde der Gewindeschraube (6) für das Mitschleppen mit Reibwiderstand eingebracht/eingeschraubt wird/ist.

2. Distanzvorrichtung nach Anspruch 1, **dadurch gekennzeichnet, dass** der Kunststoffmitnehmer (28) ein Untermaß-Innengewinde für die Gewindeschraube, einen Untermaß-Schraubenkanal (33) und/oder einen Aufnahmekanal zum selbstschneidenden Einschrauben des Gewindes der Gewindeschraube (6) aufweist.

3. Distanzvorrichtung nach einem der vorhergehenden Ansprüche, **dadurch gekennzeichnet, dass** der Kunststoffmitnehmer (28) als Mitnehmerhülse (29) ausgebildet ist, die einen Innenkanal (32) für die Gewindeschraube (6) aufweist.

4. Distanzvorrichtung nach einem der vorhergehenden Ansprüche, **dadurch gekennzeichnet, dass** die Mitnehmerhülse (29) im Stützteil (18) oder Gegenstützteil (19) befestigt ist oder das Stützteil (18) oder Gegenstützteil (19) bildet.

5. Distanzvorrichtung nach einem der vorhergehenden Ansprüche, **gekennzeichnet durch** eine Verdrehsicherung (31) zwischen Mitnehmerhülse (29) und Stützteil (18) oder Gegenstützteil (19), wobei die Verdrehsicherung (31) als unrunder Außenquerschnitt der Mitnehmerhülse (29) und entsprechend formangepasster Innenquerschnitt eines Durchbruchs (25) des Stützteils (18) oder Gegenstützteils (19) ausgebildet ist.

6. Distanzvorrichtung nach einem der vorhergehenden Ansprüche, **gekennzeichnet durch** einen an dem Stützteil (18) oder Gegenstützteil (19) befestigbaren/befestigten Halter (34) zur Festlegung des Stützteils (18) oder Gegenstützteils (19) am Tragteil (3) oder an der Dachkarosserie (4).

7. Distanzvorrichtung nach einem der vorhergehenden Ansprüche, **dadurch gekennzeichnet, dass** der Halter (34) im Stützteil (18) oder Gegenstützteil (19) mittels Klipsbefestigung (37) befestigt ist.

8. Distanzvorrichtung nach einem der vorhergehenden Ansprüche, **dadurch gekennzeichnet, dass** der Halter (34) Stütz- und Hintergriffselemente (42,43) zur Befestigung am Tragteil (3) oder an der Dachkarosserie (4) aufweist.

9. Distanzvorrichtung nach einem der vorhergehenden Ansprüche, **dadurch gekennzeichnet, dass** der Halter (34) als Ringhalter (35) ausgebildet ist, der das Stützteil (18) oder Gegenstütztell (19) umgreift.

10. Distanzvorrichtung nach einem der vorhergehenden Ansprüche, **dadurch gekennzeichnet, dass** das Stützteil (18) als mit Innengewinde (20) versehene Außenhülse (21) ausgebildet ist.

11. Distanzvorrichtung nach einem der vorhergehenden Ansprüche, **dadurch gekennzeichnet, dass** das Gegenstützteil (19) als mit Außengewinde (22) versehene Innenhülse (23) ausgebildet ist.

12. Distanzvorrichtung nach einem der vorhergehenden Ansprüche, **dadurch gekennzeichnet, dass** die Stütz- und Hintergriffselemente (42,43) des Halters (34) zum Festlegen an einem Randbereich einer Durchgangsöffnung (14) der Dachkarosserie (4) ausgebildet sind.

13. Distanzvorrichtung nach einem der vorhergehenden Ansprüche, **dadurch gekennzeichnet, dass** die Stütz- und/oder Hintergriffselemente (42,43) von elastischen Haltearmen gebildet sind.

14. Befestigungsanordnung mit einem mindestens ein Tragteil und eine Dachkarosserie aufweisenden Fahrzeugdach, einem Dachgepäckträger und einer Distanzvorrichtung nach einem oder mehreren der vorhergehenden Ansprüche, zur Befestigung des Dachgepäckträgers, wie eine Dachreling, eine Dachleiste oder dergleichen, auf dem Fahrzeugdach, **dadurch gekennzeichnet, dass** die Dachkarosserie (4) eine Durchgangsöffnung (14) aufweist, an deren Randbereich die Distanzvorrichtung (5) festlegbar ist und dass die Distanzvorrichtung (5) die Durchgangsöffnung (14) in Richtung auf den Dachgepäckträger (7) zur Anlage an diesem durchgreift.

15. Befestigungsanordnung nach Anspruch 14, **dadurch gekennzeichnet, dass** die Durchgangsöffnung (14) der Dachkarosserie (4) von einem Stützteil (18) oder einem Gegenstützteil (19) der Distanzvorrichtung (5) berührungsfrei durchgriffen wird.

## Claims

1. A distance device for bridging a free space between a carrier part and a roof body for fastening a roof luggage rack, such as a roof rail, a roof strip or the like, on a vehicle roof by means of a threaded screw, with a support part and a counter support part, wherein support part and counter support part are held together by a threaded connection and can be adjusted relative to each other in order to set the bridging length in that the support part or counter support part is carried along by a rotationally engaging connection with the threaded screw when it is screwed into a counter thread of the roof luggage rack or carrier part as far as a contact position with the carrier part or the roof body, **characterized in that** the rotationally engaging connection (27) has a plastic carrier (28) into which the thread of the threaded screw (6) is/has been screwed for carrying along with frictional resistance.

2. The distance device as claimed in Claim 1, **characterized in that** the plastic carrier (28) has an undersized internal thread for the threaded screw, an undersized screw channel (33) and/or a receiving channel for self-cutting of the thread of the threaded screw (6).

3. The distance device as claimed in one of the preceding Claims, **characterized in that** the plastic carrier (28) is designed in the form of a carrier sleeve (29) which has an internal channel (32) for the threaded screw (6).

4. The distance device as claimed in one of the preceding Claims, **characterized in that** the carrier sleeve (29) is fixed in the support part (18) or counter support part (19) or forms the support part (18) or counter support part (19).

5. The distance device as claimed in one of the preceding Claims, **characterized by** a rotational locking device (31) between carrier sleeve (29) and support part (18) or counter support part (19), wherein the rotational locking device (31) is designed in the form of a non-circular external cross section of the carrier sleeve (29) and a correspondingly shape-matched internal cross section of a cutout (25) of the support part (18) or counter support part (19).

6. The distance device as claimed in one of the preceding Claims, **characterized by** a holder (34) which can be or is fastened to the support part (18) or counter support part (19) in order to fix the support part (18) or counter support part (19) to the carrier part (3) or to the roof body (4).

7. The distance device as claimed in one of the preceding Claims, **characterized in that** the holder (34) is fixed in the support part (18) or counter support part (19) by means of a clip faster (37).

8. The distance device as claimed in one of the preceding Claims, **characterized in that** the holder (34) has supporting and rear-engaging elements (42, 43) for fastening to the carrier part (3) or to the roof body (4).

9. The distance device as claimed in one of the preceding Claims, **characterized in that** the holder (34) is designed in the form of an annular holder (35) which encompasses the support part (18) or counter support part (19).

10. The distance device as claimed in one of the preceding Claims, **characterized in that** the support part (18) is designed as an outer sleeve (21) with an internal thread (20).

11. The distance device as claimed in one of the preceding Claims, **characterized in that** the counter support part (19) is designed as an inner sleeve (23) which is provided with an external thread (22).

12. The distance device as claimed in one of the preceding Claims, **characterized in that** the supporting and rear-engaging elements (42, 43) of the holder (34) are designed to fix to an edge region of a through-opening (14) of the roof body (4).

13. The distance device as claimed in one of the preceding Claims, **characterized in that** the supporting and/or rear-engaging elements (42, 43) are formed by elastic retaining arms.

14. A fastening arrangement having a vehicle roof which has at least one carrier part and one roof body, a roof luggage rack and a distance device, as claimed in one or more of the preceding Claims, for fastening the roof luggage rack, such as a roof rail, a roof strip or the like, on the vehicle roof, **characterized in that** the roof body (4) has a through-opening (14), to the edge region of which the distance device (5) can be fastened, and that the distance device (5) protrudes through the through-opening (14) towards the roof luggage rack (7) to rest thereon.

15. The fastening arrangement as claimed in Claim 14, **characterized in that** a support part (18) or a counter support part (19) of the distance device (5) protrudes through the through-opening (14) of the roof body (4) without contact.

## Revendications

1. Dispositif d'écartement pour combler un espace libre entre une partie porteuse et une carrosserie de toit pour la fixation d'un porte-bagages de toit, comme une barre de toit, une baguette de toit ou similaire, sur un toit de véhicule au moyen d'une vis filetée, avec une partie d'appui et une partie d'appui conjuguée, dans lequel la partie d'appui et la partie d'appui conjuguée sont maintenues l'une contre l'autre par le biais d'une connexion filetée et peuvent être déplacées l'une par rapport à l'autre pour le réglage de la longueur de comblement en ce que la partie d'appui ou la partie d'appui conjuguée est entraînée par une connexion d'entraînement rotatif vers la vis filetée lors de son vissage dans un filet conjugué du porte-bagages de toit ou de la partie porteuse jusque dans une position d'appui sur la partie porteuse ou sur la carrosserie de toit, **caractérisé en ce que** la connexion d'entraînement rotatif (27) présente un entraîneur plastique (28) dans lequel le filet de la vis filetée (6) est introduit/vissé pour l'entraînement avec une résistance à la friction.

2. Dispositif d'écartement selon la revendication 1, **caractérisé en ce que** l'entraîneur plastique (28) présente un filet interne de dimension inférieure pour la vis filetée, un canal de vis de dimension inférieure (33) et/ou un canal de logement pour le vissage autotaraudeur du filet de la vis filetée (6).

3. Dispositif d'écartement selon l'une quelconque des revendications précédentes, **caractérisé en ce que** l'entraîneur plastique (28) est réalisé en tant que manchon d'entraîneur (29) qui présente un canal interne (32) pour la vis filetée (6).

4. Dispositif d'écartement selon l'une quelconque des revendications précédentes, **caractérisé en ce que** le manchon d'entraîneur (29) est fixé dans la partie d'appui (18) ou la partie d'appui conjuguée (19) ou forme la partie d'appui (18) ou la partie d'appui conjuguée (19).

5. Dispositif d'écartement selon l'une quelconque des revendications précédentes, **caractérisé par** une sécurité en torsion (31) entre le manchon d'entraîneur (29) et la partie d'appui (18) ou la partie d'appui conjuguée (19), dans lequel la sécurité en torsion (31) est réalisée en tant que section transversale externe ovale du manchon d'entraîneur (29) et section transversale interne de forme adaptée en conséquence d'un ajour (25) de la partie d'appui (18) ou la partie d'appui conjuguée (19).

6. Dispositif d'écartement selon l'une quelconque des revendications précédentes, **caractérisé par** un appui (34) pouvant être fixé/fixé à la partie d'appui (18) ou la partie d'appui conjuguée (19) pour la fixation de la partie d'appui (18) ou la partie d'appui conjuguée (19) sur la partie porteuse (3) ou sur la carrosserie de toit (4).

7. Dispositif d'écartement selon l'une quelconque des revendications précédentes, **caractérisé en ce que** l'appui (34) est fixé dans la partie d'appui (18) ou la partie d'appui conjuguée (19) au moyen d'une fixation par clip (37).

8. Dispositif d'écartement selon l'une quelconque des revendications précédentes, **caractérisé en ce que** l'appui (34) présente des éléments d'appui et de contre-dépouille (42, 43) pour la fixation sur la partie porteuse (3) ou sur la carrosserie de toit (4).

9. Dispositif d'écartement selon l'une quelconque des revendications précédentes, **caractérisé en ce que** l'appui (34) est réalisé en tant qu'appui annulaire (35) qui entoure la partie d'appui (18) ou la partie d'appui conjuguée (19).

10. Dispositif d'écartement selon l'une quelconque des revendications précédentes, **caractérisé en ce que** la partie d'appui (18) est réalisée en tant que manchon externe (21) pourvu d'un filet interne (20).

11. Dispositif d'écartement selon l'une quelconque des revendications précédentes, **caractérisé en ce que** la partie d'appui conjuguée (19) est réalisée en tant que manchon interne (23) pourvu d'un filet externe (22).

12. Dispositif d'écartement selon l'une quelconque des revendications précédentes, **caractérisé en ce que** les éléments d'appui et de contre-dépouille (42, 43) de l'appui (34) sont réalisés pour la fixation à une région de bord d'une ouverture de passage (14) de la carrosserie de toit (4).

13. Dispositif d'écartement selon l'une quelconque des revendications précédentes, **caractérisé en ce que** les éléments d'appui et/ou de contre-dépouille (42, 43) sont formés par des bras de maintien élastiques.

14. Agencement de fixation avec un toit de véhicule présentant au moins une partie porteuse et une carrosserie de toit, un porte-bagages de toit et un dispositif d'écartement selon une ou plusieurs des revendications précédentes, pour la fixation du porte-bagages de toit, comme une barre de toit, une baguette de toit ou similaire, sur le toit de véhicule, **caractérisé en ce que** la carrosserie de toit (4) présente une ouverture de passage (14) à la région de bord de laquelle le dispositif d'écartement (5) peut être fixé, et que le dispositif d'écartement (5) pénètre l'ouverture de passage (14) en direction du porte-bagages de toit (7) pour l'appui sur celui-ci.

15. Agencement de fixation selon la revendication 14, **caractérisé en ce que** l'ouverture de passage (14) de la carrosserie de toit (4) est pénétrée sans contact par une partie d'appui (18) ou une partie d'appui conjuguée (19) du dispositif d'écartement (5).
